# EUROPÄISCHE PATENTSCHRIFT

(11) **EP 4 051 919 B1**
(45) Veröffentlichungstag und Bekanntmachung des Hinweises auf die Patenterteilung: **18.10.2023**
(21) Anmeldenummer: 20824100.0
(22) Anmeldetag: 25.11.2020
(51) Int. Cl.: F16D 3/62

(54) **AUSGLEICHSKUPPLUNG**
COMPENSATING COUPLING
ACCOUPLEMENT DE COMPENSATION

(30) Priorität: 23.12.2019 DE 102019220560
(43) Veröffentlichungstag der Anmeldung: 07.09.2022
(73) Patentinhaber: Siemens Mobility GmbH, 81739 München (DE)
(72) Erfinder: ZÄCH, Martin, 83064 Raubling (DE)
(74) Vertreter: Siemens Patent Attorneys
(86) Internationale Anmeldenummer: PCT/EP2020/083410
(87) Internationale Veröffentlichungsnummer: WO 2021/129994

(56) Entgegenhaltungen:
- DE-A1- 19 744 244
- DE-A1- 19 839 451
- DE-A1-102012 014 652
- FR-A- 1 325 013
- GB-A- 1 345 036
- US-A- 2 561 117

## Beschreibung

Die Erfindung betrifft eine Ausgleichskupplung für Schienenfahrzeuge.

Kupplungen bzw. Ausgleichskupplungen gemäß dem bekannten Stand der Technik werden beispielsweise in den folgenden Druckschriften beschrieben: US 2561117 A, GB 1345036 A, FR 1325013 A, DE 19839451 A1 oder DE 19744244 A1. Aus dem Dokument US 2561117 A geht eine gattungsgemäße Ausgleichskupplung hervor.

Eine Ausgleichskupplung überträgt Drehzahlen von einer ersten Welle zu einer zweiten Welle, ohne sie zu wandeln. Die Ausgleichskupplung wird zum Ausgleichen von mechanischen Abweichungen verwendet, beispielsweise:
- wenn die Längsachsen der beiden Wellen zueinander nicht fluchten, so dass es zu einer radialen Verlagerung oder zu einer Winkelverlagerungen der Längsachsen der Wellen kommt,
- wenn sich die beiden Wellen durch Temperaturveränderungen in ihrer Länge verändern, bzw.
- wenn Montageungenauigkeiten auszugleichen sind, die zu einer radialen Verlagerung oder zu einer Winkelverlagerungen der Längsachsen der Wellen führen.

Eine Ausgleichskupplung ist drehsteif ausgeführt. Drehmomente werden beispielsweise formschlüssig über Klauen, Zähne, Schubgelenke bzw. über Zapfen in Lagerbuchsen übertragen. Stöße und Schwankungen werden von den Ausgleichskupplungen entsprechend ihrer Steifigkeit übertragen.

Es ist eine Ausgleichskupplungen zur Verbindung zweier Wellen bekannt, die im Kupplungsbereich zumindest einen elastischen Körper aufweist:
Dabei ist eine erste Welle an einem ihrer Enden mit einem ersten Kupplungskörper verbunden, der Teil der Ausgleichskupplung ist. Entsprechend ist eine zweite Welle an einem ihrer Enden mit einem zweiten Kupplungskörper verbunden, der ebenfalls Teil der Ausgleichskupplung ist. Zwischen dem ersten und dem zweiten Kupplungskörper ist zumindest ein elastischer Körper angeordnet, über den die beiden Kupplungskörper miteinander verbunden sind. Dadurch wird eine Relativbewegung der beiden Kupplungskörper zueinander ermöglicht.

Diese Form der Ausgleichskupplung hat als störende Eigenschaft, dass, bedingt durch die geometrische Anordnung der Elemente der Ausgleichskupplung, das von der ersten Welle auf die zweite Welle übertragene Drehmoment sich auf die axiale Steifigkeit der Ausgleichskupplung auswirkt.

Die Drehmoment-Übertragung zwischen den beiden Wellen erfolgt durch die Kraftübertragung zwischen den Anbindungspunkten, über die der elastische Körper mit den beiden Kupplungskörpern verbunden ist. Je nach Ausgestaltung der Kupplungselemente bzw. bedingt durch die Lage der Anbindungspunkte kann ein entsprechender Kraftvektor der Übertragung radiale und axiale Kraftanteile aufweisen, die auf die beiden Wellen wirken.

Diese radialen und axialen Kraftanteile sind im Allgemeinen abhängig von der Auslenkung der Kupplungselemente. Dabei stellen die radial und axial wirkenden Kraftanteile eine zusätzliche Rückstellkraft dar, die eine Gesamtsteifigkeit des Ausgleichskupplung beeinflussen.

Die Gesamtsteifigkeit definiert eine Reaktionskraft der Ausgleichskupplung auf eine aufgebrachte Verschiebung und wird beeinflusst durch eine Rückstellkraft, die durch die Reaktionskraft der elastischen Elemente der Ausgleichskupplung auf die Auslenkung der Ausgleichskupplung bedingt wird, und durch eine Rückstellkraft aufgrund der Drehmoment-Übertragung.

Dies führt dazu, dass die Gesamtsteifigkeit der Ausgleichskupplung bei einer radialen und axialen Verschiebung sowohl von der Verschiebung als auch vom gerade übertragenen Drehmoment abhängt.

Beispielsweise verursacht ein auf die Ausgleichskupplung wirkendes Drehmoment bei einer radialen Auslenkung eine radial gerichtete erste Kraft. Bei einer axialen Auslenkung der Ausgleichskupplung wird eine axiale zweite Kraft gebildet. Beide Kräfte sind mit dem wirkenden Drehmoment gekoppelt.

Diese Kopplung führt dazu, dass eine axiale und radiale Steifigkeit der Ausgleichskupplung letztlich vom übertragenen Drehmoment abhängt, was bei der Auslegung von Fahrwerken von Schienenfahrzeugen nicht gewollt ist.

Es ist daher die Aufgabe der vorliegenden Erfindung, eine Ausgleichskupplung derart auszugestalten, dass deren axiale Steifigkeit nur im geringen Maß vom übertragenen Drehmoment abhängt bzw. davon gänzlich unabhängig ist.

Diese Aufgabe wird durch die Merkmale des Anspruchs 1 gelöst. Vorteilhafte Weiterbildungen sind in den jeweiligen abhängigen Ansprüchen angegeben.

Die Erfindung betrifft eine Ausgleichskupplung, bevorzugt für Schienenfahrzeuge, zur Verbindung einer ersten Welle mit einer zweiten Welle längs einer Rotationsachse.

Die Ausgleichskupplung beinhaltet einen ersten Kupplungskörper, der mit einem Ende einer ersten Welle verbindbar ist, und einen zweiten Kupplungskörper, der mit einem Ende einer zweiten Welle verbindbar ist.

Die Ausgleichskupplung beinhaltet zumindest ein elastisches Kupplungselement, dessen Längsachse in einer Ebene liegt, die senkrecht zur Rotationsachse ausgerichtet ist.

Die beiden Kupplungskörper sind zueinander derart angeordnet, dass ein dreidimensionaler Kupplungsbereich gebildet wird, in dem das zumindest eine elastische Kupplungselement zwischen den beiden Kupplungskörpern angeordnet ist.

Das elastische Kupplungselement ist derart mit den beiden Kupplungskörpern verbunden, dass die Kupplungskörper in radialer Richtung zur Rotationsachse verschiebbar sind.

Dies wird durch die Elastizität des Kupplungselements verwirklicht.

Das elastische Kupplungselement ist darüber hinaus derart mit den beiden Kupplungskörpern verbunden, dass das Kupplungselement in axialer Richtung zur Rotationsachse verschiebbar ist.

Dadurch wird ermöglicht, dass die beiden Kupplungskörper zueinander auch in axialer Richtung verschiebbar sind.

Erfindungsgemäß ist ein Ende der ersten Welle mit dem ersten Kupplungskörper verbunden, während ein Ende der zweiten Welle mit dem zweiten Kupplungsträger verbunden ist. Diese Verbindung ist derart, dass jeweilige Längsachsen der beiden Wellen mit der Rotationsachse der Ausgleichskupplung zusammenfallen.

Erfindungsgemäß sind die beiden Kupplungskörper rotationssymmetrisch zur Rotationsachse ausgebildet.

Erfindungsgemäß ist das zumindest eine elastische Kupplungselement ein faserverstärktes Polymer.

Erfindungsgemäß ist das zumindest eine elastische Kupplungselement streifenförmig ausgebildet und weist eine zylinderförmige oder quaderförmige Grundform auf.

Erfindungsgemäß weist der erste Kupplungskörper ein Segment auf, das zur Verbindung des erste Kupplungskörpers mit einem ersten Ende des elastischen Kupplungselements ausgebildet ist. Diese Verbindung ist derart gestaltet, dass die Längsachse des elastischen Kupplungselements in einer Ebene liegt, die senkrecht zur Rotationsachse steht.

Erfindungsgemäß weist der zweite Kupplungskörper ein Segment auf, das zur Verbindung des zweiten Kupplungskörpers mit einem zweiten Ende des elastischen Kupplungselements ausgebildet ist. Diese Verbindung ist derart gestaltet, dass die Längsachse des elastischen Kupplungselements in der Ebene liegt, die senkrecht zur Rotationsachse steht.

Erfindungsgemäß beinhaltet das elastische Kupplungselement an einem seiner Enden oder an beiden Enden einen Einsatz aus Metall, der im elastischen Kupplungselement als Hülse einlaminiert ist. Das Segment des ersten Kupplungskörpers weist eine Schraube auf, über die eine Distanzhülse verspannt ist. Zwischen dem Kopf der Schraube und der Distanzhülse befindet sich eine Scheibe, die einen axialen Anschlag für das elastische Kupplungselement bei einer axialen Verschiebung darstellt. Die einlaminierte Hülse des elastischen Kupplungselements ist über die Distanzhülse geschoben und so das elastische Kupplungselement mit dem erste Kupplungskörper verbunden ist. Über die Distanzhülse ist erreicht, dass das elastische Kupplungselement in axialer Richtung, d.h. längs zur Rotationsachse der Ausgleichskupplung, verschiebbar. Das elastische Kupplungselement ist um die Rotationsachse der Schraube drehbar.

In einer bevorzugten Weiterbildung ist das erste Ende des elastischen Kupplungselements zusätzlich federnd mit einer Innenseite des ersten Kupplungskörpers verbunden, wobei diese Innenseite senkrecht zur Rotationsachse ausgerichtet ist und die Innenseite zum Inneren des dreidimensionalen Kupplungsbereichs weist.

In einer bevorzugten Weiterbildung ist das zweite Ende des elastischen Kupplungselements zusätzlich federnd mit einer Innenseite des zweiten Kupplungskörpers verbunden, wobei diese Innenseite senkrecht zur Rotationsachse ausgerichtet ist und die Innenseite zum Inneren des dreidimensionalen Kupplungsbereichs weist.

Durch diese Federkraft wird eine Zentrierung in axialer Richtung realisiert.

Durch die vorliegende Erfindung wird eine Ausgleichskupplung erreicht, deren Steifigkeit nur im geringen Maße vom übertragenen Drehmoment abhängt bzw. davon gänzlich unabhängig ist.

Die vorliegende Erfindung ermöglicht neue Antriebskonzepte unter Verwendung der erfindungsgemäßen Ausgleichskupplung, wobei Vorteile hinsichtlich Leistung, Effektivität und Kosten des Antriebskonzepts erzielt werden.

Nachfolgend wird die vorliegende Erfindung beispielhaft anhand einer Zeichnung näher erläutert. Dabei zeigt:
- FIG 1: die vorliegende Erfindung in einer prinzipiellen Darstellung,
- FIG 2: mit Bezug auf FIG 1 eine vorteilhafte Weiterbildung der vorliegenden Erfindung in einer prinzipiellen Darstellung, und
- FIG 3 bis FIG 7: konkrete Ausgestaltungen der Erfindung mit Bezug auf FIG 1 und FIG 2.

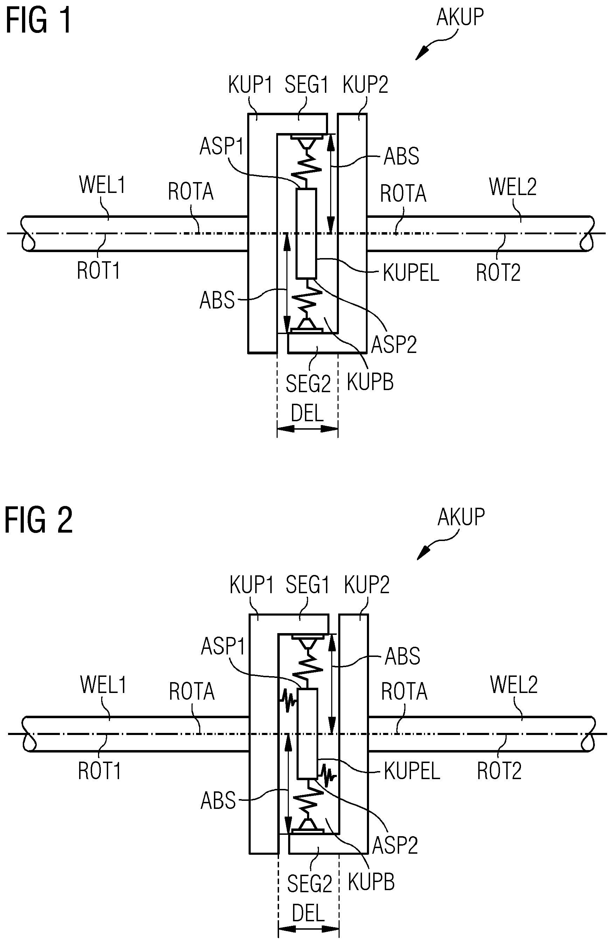

FIG 1 zeigt die vorliegende Erfindung in einer prinzipiellen Darstellung.

Eine Ausgleichskupplung AKUP verbindet eine erste Welle WEL1, die eine erste Rotationsachse ROT1 aufweist, axial mit einer zweiten Welle WEL2, die eine zweite Rotationsachse ROT2 aufweist.

Durch diese Verbindung bilden die beiden Rotationsachsen ROT1, ROT2 eine gemeinsame Rotationsachse ROTA.

Die erste Welle WEL1 ist an einem Ende mit einem ersten Kupplungskörper KUP1 verbunden, der Teil der Ausgleichskupplung AKUP ist.

Die zweite Welle WEL2 ist an einem Ende mit einem zweiten Kupplungsträger KUP2 verbunden, der ebenfalls Teil der Ausgleichskupplung AKUP ist.

Die beiden Kupplungskörper KUP1, KUP2 sind bevorzugt rotationssymmetrisch, beispielswiese zylinderförmig, zur Rotationsachse ROTA ausgebildet.

Die beiden Kupplungskörper KUP1, KUP2 sind zueinander derart angeordnet, dass sie einen dreidimensionalen Kupplungsbereich KUPB bilden.

Hier sind die beiden Kupplungskörper KUP1, KUP2 derart zueinander angeordnet, dass sie einen dreidimensionalen Kupplungsbereich KUPB zumindest teilweise umschließen und diesen dadurch bilden.

Im hier gezeigten Beispiel wird der dreidimensionale Kupplungsbereich KUPB über einen ersten Abstand ABS und über einen zweiten Abstand DEL definiert.

Dabei ist der erste Abstand ABS durch den Abstand von Segmenten SEG1, SEG2 zur gemeinsamen Rotationsachse ROTA bestimmt, betrachtet in radialer Richtung zur Rotationsachse ROTA.

Der zweite Abstand DEL ist durch den Abstand von den einander zugewandten Innenseiten der beiden Kupplungskörper KUP1, KUP2 bestimmt, betrachtet in axialer Richtung, d.h. längs zur Rotationsachse ROTA.

Im Kupplungsbereich KUPB ist zumindest ein elastisches Kupplungselement KUPEL angeordnet. Das elastische Kupplungselement KUPEL weist eine Längsachse auf, die in einer Ebene liegt, wobei die Rotationsachse ROTA senkrecht zu dieser Ebene ausgerichtet ist.

Das elastische Kupplungselement KUPEL ist dabei bevorzugt als faserverstärktes Polymer ausgebildet.

Das elastisches Kupplungselement KUPEL ist bevorzugt streifenförmig, bevorzugt mit einer zylinderförmigen oder quaderförmigen Grundform ausgebildet.

Der erste Kupplungskörper KUP1 weist zumindest ein Segment SEG1 auf, das zur Verbindung des erste Kupplungskörpers KUP1 mit einem ersten Ende ASP1 des elastischen Kupplungselements KUPEL ausgebildet ist.

Diese Verbindung ist dabei derart gestaltet, dass die oben beschriebene Lage der Längsachse des elastischen Kupplungselements KUPEL in der Ebene, die senkrecht zur Rotationsachse ROTA steht, realisiert wird.

Der zweite Kupplungskörper KUP2 weist zumindest ein Segment SEG2 auf, das zur Verbindung des zweiten Kupplungskörpers KUP2 mit einem zweiten Ende ASP2 des elastischen Kupplungselements KUPEL ausgebildet ist.

Diese Verbindung ist dabei derart gestaltet, dass die oben beschriebene Lage der Längsachse des elastischen Kupplungselements KUPEL in der Ebene, die senkrecht zur Rotationsachse ROTA steht, realisiert wird.

Das zweite Ende ASP2 des elastischen Kupplungselements KUPEL ist dabei gegenüberliegend zum ersten Ende ASP1 des elastischen Kupplungselements KUPEL angeordnet.

Das elastische Kupplungselement KUPEL ist im Kupplungsbereich KUPB derart angeordnet und über die Segmente SEG1, SEG2 mit den beiden Kupplungskörpern KUP1, KUP2 verbunden, dass die Kupplungskörper KUP1, KUP2 in radialer Richtung, d.h. senkrecht zur Rotationsachse ROTA, verschiebbar sind.

Bei einer Verschiebung der beiden Kupplungskörpern KUP1, KUP2 in radialer Richtung wird eine Rückstellkraft durch die Elastizität des Kupplungselements KUPEL bewirkt.

Wie beschrieben ist das elastische Kupplungselement KUPEL im Kupplungsbereich KUPB derart angeordnet und über die Segmente SEG1, SEG2 mit den beiden Kupplungskörpern KUP1, KUP2 verbunden, dass das elastische Kupplungselement KUPEL auch in axialer Richtung, d.h. längs zur Rotationsachse ROTA, verschiebbar ist.

Aus einer Verschiebung der Kupplungskörper KUP1, KUP2 längs der Rotationsachse ROTA resultiert hier keine axial wirkende Rückstellkraft.

Das elastische Kupplungselement KUPEL richtet sich bei einer axialen Verschiebung immer in einer Ebene senkrecht zur Rotationsachse aus. Ein übertragenes Drehmoment führt deshalb nicht mehr zu einer axial wirkenden Kraft, welche eine ungewollte Rückstellkraft darstellt.

Zusammengefasst ist dadurch die vorstehend beschriebene Koppelung zwischen axial wirkender Kraft und übertragenem Drehmoment aufgehoben.

FIG 2 zeigt mit Bezug auf FIG 1 eine vorteilhafte Weiterbildung der vorliegenden Erfindung in einer weiteren prinzipiellen Darstellung.

Das erste Ende ASP1 des elastischen Kupplungselements KUPEL ist hier zusätzlich federnd mit einer Innenseite des ersten Kupplungskörpers KUP1 verbunden.

Diese Innenseite ist senkrecht zur Rotationsachse ROTA ausgerichtet. Die Innenseite weist darüber hinaus zum Inneren des dreidimensionalen Kupplungsbereichs KUPB.

Das zweite Ende ASP2 des elastischen Kupplungselements KUPEL ist entsprechend zusätzlich federnd mit einer Innenseite des zweiten Kupplungskörpers KUP2 verbunden.

Diese Innenseite ist senkrecht zur Rotationsachse ROTA ausgerichtet. Die Innenseite weist darüber hinaus zum Inneren des dreidimensionalen Kupplungsbereichs KUPB.

In dieser bevorzugten Weiterbildung ist das zumindest eine elastische Kupplungselement KUPEL derart mit den beiden Kupplungskörpern KUP1, KUP2 verbunden, dass die Ausgleichskupplung AKUP mit Bezug zur FIG 1 zusätzlich auch in axialer Richtung, d.h. längs zur Rotationsachse ROTA, eine definierte Steifigkeit aufweist. Dies kann beispielsweise, wie nachfolgend beschrieben, mit Hilfe einer Spiralfeder realisiert werden.

Die Steifigkeit wird über die konkrete federnde Verbindung definiert.

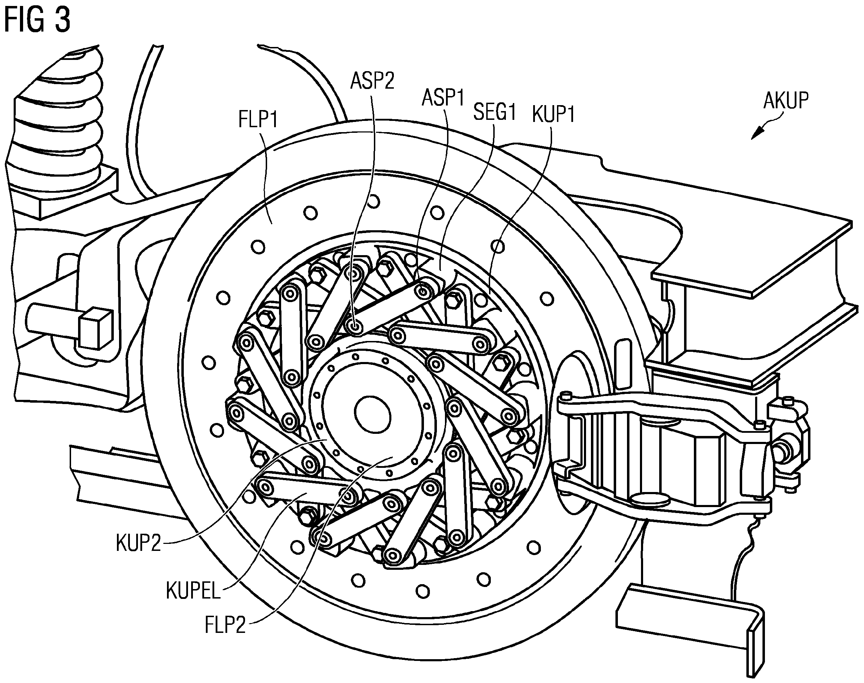

FIG 3 bis FIG 7 zeigen eine konkrete Ausgestaltung der Erfindung.

FIG 3 zeigt einen Ausschnitt eines Fahrwerks eines Schienenfahrzeugs, bei dem die erfindungsgemäße Ausgleichskupplung AKUP verwendet wird.

Zu erkennen ist ein erster Kupplungskörper KUP1, der mit einer ersten Flanschplatte FLP1 verbunden ist. Über deren Lochkreis ist eine erste Welle (hier nicht dargestellt) mit dem ersten Kupplungskörper KUP1 verbindbar.

Zu erkennen ist ein zweiter Kupplungskörper KUP2, der mit einer zweiten Flanschplatte FLP2 verbunden ist. Über deren Lochkreis ist eine zweite Welle (hier nicht dargestellt) mit dem zweiten Kupplungskörper KUP2 verbindbar.

Die beiden Kupplungskörper KUP1, KUP2 sind als flache Zylinder ausgebildet, deren Durchmesser um ein Vielfaches größer sind als deren jeweilige Höhe.

Weiter sind eine Vielzahl an streifenförmigen bzw. quaderförmigen, elastischen Kupplungselementen KUPEL zu sehen, die die beiden Kupplungskörper KUP1, KUP2 miteinander verbinden.

Die elastischen Kupplungselemente KUPEL weisen jeweilige Längsachsen auf. In Gruppen geteilt liegen diese Längsachsen in jeweiligen Ebenen, die senkrecht zur Rotationsachse ROTA der Ausgleichskupplung AKUP stehen.

Der erste Kupplungskörper KUP1 weist eine Vielzahl an Segmenten SEG1 auf, die zur Verbindung des erste Kupplungskörpers KUP1 mit ersten Enden ASP1 der elastischen Kupplungselemente KUPEL ausgebildet sind.

Das zweite Ende ASP2 des jeweiligen elastischen Kupplungselements KUPEL ist dabei gegenüberliegend zum ersten Ende ASP1 des jeweiligen elastischen Kupplungselements KUPEL angeordnet.

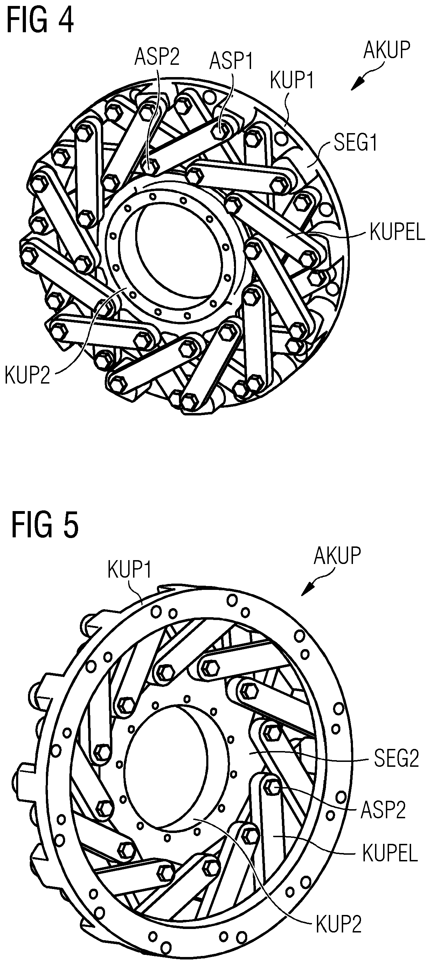

FIG 4 und FIG 5 zeigen mit Bezug zu FIG 3 zwei detaillierte Ansichten der Ausgleichskupplung AKUP.

Der zweite Kupplungskörper KUP2 weist ebenfalls eine Vielzahl an Segmenten SEG2 auf, die zur Verbindung des zweiten Kupplungskörpers KUP2 mit jeweiligen zweiten Enden ASP2 der elastischen Kupplungselemente KUPEL ausgebildet sind.

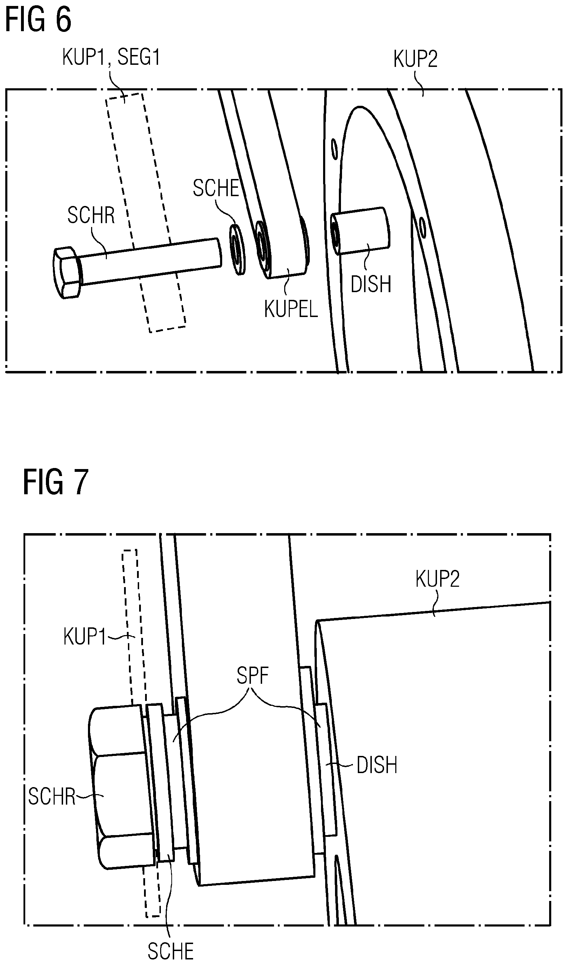

FIG 6 zeigt mit Bezug auf die Figuren FIG 3 bis FIG 5 eine Explosionszeichnung, um die Verbindungssituation der wesentlichen Elemente der Ausgleichskupplung AKUP beispielhaft zu veranschaulichen.

Das elastische Kupplungselement KUPEL beinhaltet an einem seiner Enden oder an beiden Enden einen Einsatz aus Metall, der im elastischen Kupplungselement KUPEL als Hülse einlaminiert ist.

Der erste Kupplungskörper KUP1 bzw. dessen erstes Segment SEG1 weist eine Schraube SCHR auf, über die eine Distanzhülse DISH verspannt wird.

Zwischen dem Kopf der Schraube SCHR und der Distanzhülse DISH befindest sich bevorzugt eine Scheibe SCHE, die einen axialen Anschlag für das elastische Kupplungselement KUPEL bei einer axialen Verschiebung darstellt.

Die einlaminierte Hülse des elastische Kupplungselement KUPEL wird über die Distanzhülse DISH geschoben und das elastische Kupplungselement KUPEL so mit dem erste Kupplungskörper KUP1 verbunden.

Über die Distanzhülse DISH wird erreicht, dass das elastische Kupplungselement KUPEL in axialer Richtung, d.h. längs zur Rotationsachse der Ausgleichskupplung AKUP, verschiebbar ist.

Über die Distanzhülse DISH und die einlaminierte Hülse des elastische Kupplungselement KUPEL wird ein Dreh-Schubgelenk verwirklicht. Dadurch ist das elastische Kupplungselement KUPEL in axialer Richtung, d.h. längs zur Rotationsachse der Schraube SCHE, die vorzugsweise parallel zur Rotationsachse ROTA der Ausgleichskupplung AKUP liegt, verschiebbar.

Zusätzlich ist das elastische Kupplungselement KUPEL um die Rotationsachse der Schraube SCHR drehbar.

Wie oben beschrieben resultiert dadurch aus einer Verschiebung der Kupplungskörper KUP1, KUP2 längs der Rotationsachse der Ausgleichskupplung AKUP keine axial wirkende Rückstellkraft.

FIG 7 zeigt mit Bezug auf FIG 6 die in FIG 2 vorab beschriebene vorteilhafte Weiterbildung in einer konkreten Ausgestaltung.

Die in FIG 2 beschriebene zusätzliche federnde Abstützung wird hier beispielhaft durch zwei Spiralfedern SPF verwirklicht, die auf zwei gegenüberliegenden Seiten des elastischen Kupplungselements KUPEL angeordnet sind und die mit der in FIG 6 beschriebenen Schraubverbindung zusammenwirken.

In dieser bevorzugten Weiterbildung weist die Ausgleichskupplung AKUP in axialer Richtung, d.h. längs zur Rotationsachse der Ausgleichskupplung, eine definierte Steifigkeit auf, die durch die beiden Spiralfedern SPF bedingt wird.

## Patentansprüche

1. Ausgleichskupplung (AKUP) zur Verbindung einer ersten Welle (WEL1) mit einer zweiten Welle (WEL2) längs einer Rotationsachse (ROTA),
- mit einem ersten Kupplungskörper (KUP1), der mit einem Ende einer ersten Welle (WEL1) verbindbar ist,
- mit einem zweiten Kupplungskörper (KUP2), der mit einem Ende einer zweiten Welle (WEL2) verbindbar ist,
- mit zumindest einem elastischen Kupplungselement (KUPEL), das eine Längsachse aufweist, wobei die Längsachse in einer Ebene liegt, die senkrecht zur Rotationsachse (ROTA) ausgerichtet ist,
- bei der die beiden Kupplungskörper (KUP1, KUP2) zueinander derart angeordnet sind, dass ein dreidimensionalen Kupplungsbereich (KUPB) gebildet wird, in dem das zumindest ein elastische Kupplungselement (KUPEL) zwischen den beiden Kupplungskörpern (KUP1, KUP2) angeordnet ist,
- bei der das elastische Kupplungselement (KUPEL) derart mit den beiden Kupplungskörpern (KUP1, KUP2) verbunden ist, dass die beiden Kupplungskörper (KUP1, KUP2) in radialer Richtung zur Rotationsachse (ROTA) verschiebbar sind, und
- bei der das elastische Kupplungselement (KUPEL) derart mit den beiden Kupplungskörpern (KUP1, KUP2) verbunden ist, dass das Kupplungselement (KUPEL) in axialer Richtung zur Rotationsachse (ROTA) verschiebbar ist,
- bei der ein Ende der ersten Welle (WEL1) mit dem ersten Kupplungskörper (KUP1) verbunden ist und bei der ein Ende der zweiten Welle (WEL2) mit dem zweiten Kupplungsträger (KUP2) verbunden ist, so dass jeweilige Längsachsen der beiden Wellen mit der Rotationsachse (ROTA) zusammenfallen,
- bei der die beiden Kupplungskörper (KUP1, KUP2) rotationssymmetrisch zur Rotationsachse (ROTA) ausgebildet sind,
- bei der das zumindest eine elastische Kupplungselement (KUPEL) als faserverstärktes Polymer ausgebildet ist und das zumindest eine elastische Kupplungselement (KUPEL) streifenförmig ausgebildet ist und eine zylinderförmige oder quaderförmige Grundform aufweist,
- bei der der erste Kupplungskörper (KUP1) ein Segment (SEG1) aufweist, das zur Verbindung des erste Kupplungskörpers (KUP1) mit einem ersten Ende (ASP1) des elastischen Kupplungselements (KUPEL) ausgebildet ist und diese Verbindung derart gestaltet ist, dass die Längsachse des elastischen Kupplungselements (KUPEL) in der Ebene liegt, die senkrecht zur Rotationsachse (ROTA) steht,
- bei der der zweite Kupplungskörper (KUP2) ein Segment (SEG2) aufweist, das zur Verbindung des zweiten Kupplungskörpers (KUP2) mit einem zweiten Ende (ASP2) des elastischen Kupplungselements (KUPEL) ausgebildet ist und diese Verbindung derart gestaltet ist, dass die Längsachse des elastischen Kupplungselements (KUPEL) in der Ebene liegt, die senkrecht zur Rotationsachse (ROTA) steht,
**dadurch gekennzeichnet,**
- **dass** das elastische Kupplungselement (KUPEL) an einem seiner Enden oder an beiden Enden einen Einsatz aus Metall beinhaltet, der im elastischen Kupplungselement (KUPEL) als Hülse einlaminiert ist,
- **dass** das Segment (SEG1) des ersten Kupplungskörpers (KUP1) eine Schraube (SCHR) aufweist, über die eine Distanzhülse (DISH) verspannt ist,
- **dass** zwischen dem Kopf der Schraube (SCHR) und der Distanzhülse (DISH) sich eine Scheibe (SCHE) befindet, die einen axialen Anschlag für das elastische Kupplungselement (KUPEL) bei einer axialen Verschiebung darstellt,
- **dass** die einlaminierte Hülse des elastischen Kupplungselements (KUPEL) über die Distanzhülse (DISH) geschoben ist und das elastische Kupplungselement (KUPEL) so mit dem erste Kupplungskörper (KUP1) verbunden ist,
- **dass** über die Distanzhülse (DISH) erreicht ist, dass das elastische Kupplungselement (KUPEL) in axialer Richtung, d.h. längs zur Rotationsachse der Ausgleichskupplung (AKUP), verschiebbar ist, und
- **dass** das elastische Kupplungselement (KUPEL) um die Rotationsachse der Schraube (SCHR) drehbar ist.

2. Ausgleichskupplung nach Anspruch 1, **dadurch gekennzeichnet, dass** das erste Ende (ASP1) des elastischen Kupplungselements (KUPEL) zusätzlich federnd mit einer Innenseite des ersten Kupplungskörpers (KUP1) verbunden ist, wobei diese Innenseite senkrecht zur Rotationsachse (ROTA) ausgerichtet ist und die Innenseite zum Inneren des dreidimensionalen Kupplungsbereichs (KUPB) weist.

3. Ausgleichskupplung nach Anspruch 1 oder 2, **dadurch gekennzeichnet, dass** das zweite Ende (ASP2) des elastischen Kupplungselements (KUPEL) zusätzlich federnd mit einer Innenseite des zweiten Kupplungskörpers (KUP2) verbunden ist, wobei diese Innenseite senkrecht zur Rotationsachse (ROTA) ausgerichtet ist und die Innenseite zum Inneren des dreidimensionalen Kupplungsbereichs (KUPB) weist.

## Claims

1. Compensating coupling (AKUP) for connecting a first shaft (WEL1) to a second shaft (WEL2) along a rotational axis (ROTA),
- having a first coupling body (KUP1) which can be connected to an end of a first shaft (WEL1),
- having a second coupling body (KUP2) which can be connected to an end of a second shaft (WEL2),
- having at least one elastic coupling element (KUPEL) which has a longitudinal axis, wherein the longitudinal axis lies in a plane which is oriented perpendicularly with respect to the rotational axis (ROTA),
- in the case of which compensating coupling the two coupling bodies (KUP1, KUP2) are arranged relative to one another in such a way that a three-dimensional coupling region (KUPB) is formed in which the at least one elastic coupling element (KUPEL) is arranged between the two coupling bodies (KUP1, KUP2),
- in the case of which compensating coupling the elastic coupling element (KUPEL) is connected to the two coupling bodies (KUP1, KUP2) in such a way that the two coupling bodies (KUP1, KUP2) can be displaced in a radial direction with respect to the rotational axis (ROTA), and
- in the case of which compensating coupling the elastic coupling element (KUPEL) is connected to the two coupling bodies (KUP1, KUP2) in such a way that the coupling element (KUPEL) can be displaced in an axial direction with respect to the rotational axis (ROTA),
- in the case of which compensating coupling an end of the first shaft (WEL1) is connected to the first coupling body (KUP1), and in the case of which compensating coupling an end of the second shaft (WEL2) is connected to the second coupling carrier (KUP2), such that respective longitudinal axes of the two shafts coincide with the rotational axis (ROTA),
- in the case of which compensating coupling the two coupling bodies (KUP1, KUP2) are configured in a rotationally symmetrical manner with respect to the rotational axis (ROTA),
- in the case of which compensating coupling the at least one elastic coupling element (KUPEL) is in the form of a fibre-reinforced polymer, and the at least one elastic coupling element (KUPEL) is of strip-like configuration and has a cylindrical or cuboid basic shape,
- in the case of which compensating coupling the first coupling body (KUP1) has a segment (SEG1) which is configured for connecting the first coupling body (KUP1) to a first end (ASP1) of the elastic coupling element (KUPEL), and this connection is designed in such a way that the longitudinal axis of the elastic coupling element (KUPEL) lies in the plane which is perpendicular to the rotational axis (ROTA),
- in the case of which compensating coupling the second coupling body (KUP2) has a segment (SEG2) which is configured for connecting the second coupling body (KUP2) to a second end (ASP2) of the elastic coupling element (KUPEL), and this connection is designed in such a way that the longitudinal axis of the elastic coupling element (KUPEL) lies in the plane which is perpendicular to the rotational axis (ROTA),
**characterized**
- **in that** the elastic coupling element (KUPEL) includes, at one of its ends or at both ends, a metal insert, which is laminated in the form of a sleeve into the elastic coupling element (KUPEL),
- **in that** the segment (SEG1) of the first coupling body (KUP1) has a screw (SCHR), which braces a spacer sleeve (DISH),
- **in that** a disk (SCHE), which constitutes an axial stop for the elastic coupling element (KUPEL) in the case of an axial displacement, is located between the head of the screw (SCHR) and the spacer sleeve (DISH),
- **in that** the laminated-in sleeve of the elastic coupling element (KUPEL) is pushed over the spacer sleeve (DISH), and the elastic coupling element (KUPEL) is thus connected to the first coupling body (KUP1),
- **in that** the use of the spacer sleeve (DISH) achieves a situation in which the elastic coupling element (KUPEL) can be displaced in the axial direction, that is to say longitudinally with respect to the rotational axis of the compensating coupling (AKUP), and
- **in that** the elastic coupling element (KUPEL) can be rotated about the rotational axis of the screw (SCHR).

2. Compensating coupling according to Claim 1, **characterized in that** the first end (ASP1) of the elastic coupling element (KUPEL) is additionally connected to an inner side of the first coupling body (KUP1) in a resilient manner, wherein this inner side is oriented perpendicularly with respect to the rotational axis (ROTA), and the inner side points toward the interior of the three-dimensional coupling region (KUPB).

3. Compensating coupling according to Claim 1 or 2, **characterized in that** the second end (ASP2) of the elastic coupling element (KUPEL) is additionally connected to an inner side of the second coupling body (KUP2) in a resilient manner, wherein this inner side is oriented perpendicularly with respect to the rotational axis (ROTA), and the inner side points toward the interior of the three-dimensional coupling region (KUPB).

## Revendications

1. Accouplement de compensation (AKUP) pour relier un premier arbre (WEL1) à un deuxième arbre (WEL2) le long d'un axe de rotation (ROTA),
- comprenant un premier corps d'accouplement (KUP1) qui peut être relié à une extrémité d'un premier arbre (WEL1),
- comprenant un deuxième corps d'accouplement (KUP2) qui peut être relié à une extrémité d'un deuxième arbre (WEL2),
- comprenant au moins un élément d'accouplement élastique (KUPEL) qui présente un axe longitudinal, dans lequel l'axe longitudinal repose dans un plan qui est aligné perpendiculairement à l'axe de rotation (ROTA),
- dans lequel les deux corps d'accouplement (KUP1, KUP2) sont ainsi disposés l'un par rapport à l'autre qu'une zone d'accouplement tridimensionnel (KUPB) est formée, dans laquelle l'au moins un élément d'accouplement élastique (KUPEL) est disposé entre les deux corps d'accouplement (KUP1, KUP2),
- dans lequel l'élément d'accouplement élastique (KUPEL) est ainsi relié aux deux corps d'accouplement (KUP1, KUP2) que les deux corps d'accouplement (KUP1, KUP2) peuvent être déplacés dans le sens radial par rapport à l'axe de rotation (ROTA), et
- dans lequel l'élément d'accouplement élastique (KUPEL) est ainsi relié aux deux corps d'accouplement (KUP1, KUP2) que l'élément d'accouplement (KUPEL) peut être déplacé dans le sens axial par rapport à l'axe de rotation (ROTA),
- dans lequel une extrémité du premier arbre (WEL1) est reliée au premier corps d'accouplement (KUP1) et dans lequel une extrémité du deuxième arbre (WEL2) est reliée au deuxième support d'accouplement (KUP2) de sorte que les axes longitudinaux respectifs des deux arbres coïncident avec l'axe de rotation (ROTA),
- dans lequel les deux corps d'accouplement (KUP1, KUP2) sont formés en symétrie de rotation par rapport à l'axe de rotation (ROTA),
- dans lequel l'au moins un élément d'accouplement élastique (KUPEL) est formé en tant que polymère renforcé par fibres et l'au moins un élément d'accouplement élastique (KUPEL) est en forme de bande et présente une forme de base en cylindre ou en parallélépipède rectangle,
- dans lequel le premier corps d'accouplement (KUP1) présente un segment (SEG1) qui est formé pour la liaison du premier corps d'accouplement (KUP1) à une première extrémité (ASP1) de l'élément d'accouplement élastique (KUPEL) et cette liaison est ainsi formée que l'axe longitudinal de l'élément d'accouplement élastique (KUPEL) repose dans le plan qui est perpendiculaire à l'axe de rotation (ROTA),
- dans lequel le deuxième corps d'accouplement (KUP2) présente un segment (SEG2) qui est formé pour la liaison du deuxième corps d'accouplement (KUP2) à une deuxième extrémité (ASP2) de l'élément d'accouplement élastique (KUPEL) et cette liaison est ainsi formée que l'axe longitudinal de l'élément d'accouplement élastique (KUPEL) repose dans le plan qui est perpendiculaire à l'axe de rotation (ROTA),
**caractérisé en ce que**
- l'élément d'accouplement élastique (KUPEL) comporte à une de ses extrémités ou aux deux extrémités, un insert en métal qui est scellé en tant que manchon dans l'élément d'accouplement élastique (KUPEL),
- que le segment (SEG1) du premier corps d'accouplement (KUP1) présente une vis (SCHR) par laquelle est serré un manchon d'écartement (DISH),
- qu'entre la tête de la vis (SCHR) et le manchon d'écartement (DISH) se trouve une rondelle (SCHE) qui représente une butée axiale pour l'élément d'accouplement élastique (KUPEL) lors d'un déplacement axial,
- que le manchon scellé de l'élément d'accouplement élastique (KUPEL) est poussé sur le manchon d'écartement (DISH) et l'élément d'accouplement élastique (KUPEL) est ainsi relié au premier corps d'accouplement (KUP1),
- le manchon d'écartement (DISH) permet que l'élément d'accouplement élastique (KUPEL) puisse être déplacé dans le sens axial, c'est-à-dire le long de l'axe de rotation de l'accouplement de compensation (AKUP), et
- que l'élément d'accouplement élastique (KUPEL) peut tourner sur l'axe de rotation de la vis (SCHR).

2. Accouplement de compensation selon la revendication 1, **caractérisé en ce que** la première extrémité (ASP1) de l'élément d'accouplement élastique (KUPEL) est en plus reliée de manière élastique à une face intérieure du premier corps d'accouplement (KUP1), dans lequel cette face intérieure est alignée perpendiculairement à l'axe de rotation (ROTA) et la face intérieure est orientée vers l'intérieur de la zone d'accouplement tridimensionnel (KUPB).

3. Accouplement de compensation selon la revendication 1 ou 2, **caractérisé en ce que** la deuxième extrémité (ASP2) de l'élément d'accouplement élastique (KUPEL) est en plus reliée de manière élastique à une face intérieure du deuxième corps d'accouplement (KUP2), dans lequel cette face intérieure est alignée perpendiculairement à l'axe de rotation (ROTA) et la face intérieure est orientée vers l'intérieur de la zone d'accouplement tridimensionnel (KUPB).
